# EUROPEAN PATENT SPECIFICATION

(11) **EP 4 061 141 B1**
(45) Date of publication and mention of the grant of the patent: **04.10.2023**
(21) Application number: 20811595.6
(22) Date of filing: 20.11.2020
(51) Int. Cl.: A23K 10/30, A23K 40/10

(54) **PROCESS FOR MAKING ANIMAL FEED MASH AGGLOMERATES, ANIMAL FEED MASH AGGLOMERATES AND USE OF GELATINISED STARCH**
VERFAHREN ZUR HERSTELLUNG VON TIERFUTTERMAISCHE-AGGLOMERATEN, TIERFUTTERMAISCHE-AGGLOMERATE UND VERWENDUNG VON VERKLEISTERTER STÄRKE
PROCÉDÉ DE FABRICATION D'AGGLOMÉRATS DE PÂTE D'ALIMENTS POUR ANIMAUX, AGGLOMÉRATS DE PÂTE D'ALIMENTS POUR ANIMAUX ET UTILISATION D'AMIDON GÉLATINISÉ

(30) Priority: 20.11.2019 NL 2024270
(43) Date of publication of application: 28.09.2022
(73) Proprietor: ForFarmers Corporate Services B.V., 7241 CW Lochem (NL)
(72) Inventor: GAASENBEEK E/V GRAS, Annemieke, Claziena, 7943 TD MEPPEL (NL); VAN WESEL, Adrianus, Augustinus, Maria, 7241 CW LOCHEM (NL)
(74) Representative: EP&C
(86) International application number: PCT/EP2020/082946
(87) International publication number: WO 2021/099594

(56) References cited:
- EP-A2- 0 120 573
- WO-A1-2011/075140
- WO-A1-2018/147737
- FR-A1- 3 007 248
- US-A- 3 420 671

## Description

### FIELD OF THE DISCLOSURE

The present disclosure relates to the field of agriculture, feed industry, and animal feed. Particularly, the present disclosure relates to a process for the production of animal feed/concentrate mash agglomerates having improved flowability. Also provided is the animal feed/concentrate mash agglomerate obtainable by the process of the disclosure.

### BACKGROUND OF THE DISCLOSURE

Animal feed (and concentrates therefor) essentially consist of a mixture of raw feed material (e.g. grains, cereals, legumes, roughage, meat meal, fish meal, bone meal, by-process products, oil, fat, fillers or any mixture thereof, etc.), minerals, vitamins and trace elements. Animal feeds vary in their composition as well as structural properties (e.g. hardness, density, durability, shape, size, etc) depending on the nutritional needs, eating habits, digestive system (monogastric system, ruminant digestive system, etc) and habitat (e.g., aquatic, terrestrial, domestic, etc) of the animal for which the feed is intended.

It is commonly agreed in the field of agriculture and animal nutrition that animals (e.g. livestock animals like beef, cows, pigs and poultry) benefit more or make better gains (e.g. weight gain, increased height, enhanced growth curve) on agglomerated feed than a meal ration because agglomerated feed is in a more concentrated, readily edible and palatable form than meal or mash ration. Agglomerated feed eases food intake and minimizes feed waste during the eating process. It was shown that most animals, if given the choice between the same feed in a agglomerate or a mash form will prefer the agglomerate form. Because of less feed/concentrate waste, the feed efficiency (often expressed as feed conversion ratio (FCR)) is improved if an agglomerated product is used instead of a base meal mixture.

For the production of the agglomerates, harsh conditions such as high temperatures should be avoided as much as possible, as these are associated with negative effects including destruction of temperature-sensitive vitamins and supplements (e.g. vitamins A, C, B1, pigments, etc), inactivation of beneficial enzymes (e.g. amylase, phytase), destruction of amino acids (e.g. lysine) or denaturation of proteins, formation of undesirable substances (e.g. Maillard reaction by-products), overall reduction of the nutritional value or quality of the feed. Additionally, it is important that animal feed agglomerates have a good flowability in silos, transport systems and feeders on farm to ensure that equipment works well. Moreover, if a product is not free flowing, bridging can occur in silos, hoppers and feeders. In automatic feeding systems, this causes animals to be without feed for a while, which hampers performance and causes health related risks. Farm workers experience extra "hassle" at work when feeding systems do not work right because of bridging in silos, hoppers en feeders. The classical methods to improve flowability involve extruding/expanding/pelleting/crumbling. Animal feed agglomerates are typically produced on an industrial scale according to a pelleting process. A pelleting process is for example disclosed in WO 2018/147737 A1. However, a pelleting process involves significant costs and high energy use, which is not desired from a sustainability point of view. Furthermore, extruding/expanding/pelleting is typically using higher temperatures and pressure/shear which can damage bioactive compounds in feed.

It is an objective of the present disclosure to solve one or more of the problems in the prior art. In particular, there is a need for a process for producing animal feed agglomerates which leads to well-flowing agglomerates.

### SUMMARY OF THE DISCLOSURE

In a first aspect, the present disclosure relates to a process for making animal feed mash agglomerates, said process comprising the steps of:
a) providing a first feed fraction and a second feed fraction;
b) milling the first feed fraction;
c) adding water to the milled first feed fraction of step (b) to obtain a slurry that has a water content of between 50 and 99 wt.% with respect to the weight of the slurry;
d) optionally, adding one or more enzymes to the slurry of step (c) to at least partially degrade or hydrolyse non-starch polysaccharides contained in said milled first feed fraction;
e) heating the slurry of step (c) or (d) under conditions sufficient to allow the starch to gelatinize, preferably for a period of at most 5 minutes;
f) optionally milling the second feed fraction (the second feed fraction may have been milled prior to the method);
g) optionally, adding one or more aqueous liquids and/or applying steam to the milled second feed fraction of step (f) to obtain a feed mash;
h) optionally, heating the fraction of step (f) or the mash of step (g) under conditions insufficient to gelatinize starch or denature proteins comprised in the fraction or mash;
i) mixing the slurry of step (e) with the fraction or mash of step (f), (g) or (h) to obtain a feed mixture;
j) optionally, heating the feed mixture of step (i) under conditions insufficient to gelatinize starch or denature proteins comprised in the mixture; and
k) optionally, subjecting the feed mixture of step (i) or (j) to a device to form an animal feed agglomerate, wherein optionally the feed mixture of step (i) or (j) is heated under conditions insufficient to gelatinize starch or denature proteins comprised in the feed mixture in the device;
l) optionally, cooling the feed agglomerate of step (k);
m) optionally, drying the feed agglomerate of step (k) and/or (l);
wherein at least steps (c) to (e) are carried out independently of steps (g) to (h).

The method does not involve a pelleting process, i.e. no process for compaction such as wherein the mash is compressed to obtain a pellet and/or not applying a compression force of more than 10, 50, 100, 500, 1000, 2000, 3000, 4000 Newton per (semi-finished) agglomerate. A process of pelleting in its simplest form can be described according to three main steps including: 1) grinding or milling starting ingredients (e.g. grains, legumes etc), 2) mixing all the starting ingredients with a sufficient amount water to obtain a mash mixture, and 3) subjecting the mash mixture to a pelleting machine to obtain pellets. Thus, a method which does not involve a pelleting process or in other words a method which does not comprise a pelleting step, is a method in which no treatment (of a feed fraction, starting ingredients, slurry, mash, mash mixture, feed mash agglomerate, etc.) with a pelleting machine has taken place or in other words a method in which a pelleting machine/pelleting device has not been used.

In an embodiment, the first feed fraction may comprise one or more starch-containing sources.

In an embodiment, the starch-containing sources may be selected from wheat, corn, milo, rice, barley, soya, rye, spelt, oats, sorghum, potato, tapioca, tuber (i.e. tuber crops, including both stem tubers and root tubers), legumes, cotton seed meal, flax seed meal and any mixtures thereof or by-products thereof. Preferably the tuber crops are root tubers. Or processed starch sources may be used.

In an embodiment, the second feed fraction may comprise one or more feed ingredients from an animal source or a plant source.

In an embodiment, the one or more feed ingredients from the plant source may be selected from wheat, corn, milo, rice, beets, barley, soya, rye, spelt, oats, sorghum, legumes, cotton seed meal, flax seed meal and mixtures thereof.

In an embodiment, the one or more feed ingredients from the animal source may be selected from meat, meat meal, bone meal, fish meal, insects, insect meal, and any mixtures thereof. In an embodiment, the first feed fraction and the second feed fraction may comprise the same feed ingredients.

In an embodiment step (e) may be carried out at a temperature of from about 60 degree Celsius to about 140 degree Celsius for a period of from about 0.1 seconds to 600 seconds.

In an embodiment, step (h) may be carried out at a temperature of from about 60 degree Celsius to about 140 degree Celsius for a period of from about 0.1 seconds to 600 seconds.

In an embodiment relating to step (i), the slurry of step (e) and the milled second feed fraction of step (f), (g) or (h) may be mixed in a weight ratio of slurry to milled second feed fraction of about 10:90 to about 0.5:99.5.

In an embodiment relating to step (d), the one or more enzymes may be selected from xylanases, beta-glucanases, pectinases, cellulases, and hemicellulases.

In an embodiment relating to step (j), the feed mixture of step (i) may be subjected to a temperature of about 60 to about 140 degrees Celsius for a period of time of about 1 to 600 seconds.

In an embodiment relating to step (k), the feed mixture of step (i) or (j) may be subjected to a temperature of about 60 to about 140 degrees Celsius for a period of time of about 0.1 to 600 seconds.

In an embodiment, the milled first feed fraction of step (b) may have smaller particle size than the milled second feed fraction of step (f).

In an embodiment, the milled first feed fraction of step (b) may have a particle size ranging between about 0.05 mm and about 5 mm, preferably between about 2.0 mm and about 2.5 mm and the milled second feed fraction of step (f) may have a particle size ranging between about 0.5 and about 6 mm, preferably between about 3.0 mm and about 4.0 mm.

In an embodiment, the animal may be selected from ruminants, swine, and poultry.

In an embodiment, the animal may be a ruminant selected from bovine, ovine and caprine, preferably bovine.

In a second aspect, the present disclosure relates to an animal feed agglomerates obtainable by the process as taught herein.

In an embodiment relating to the animal feed agglomerates obtainable by the process as taught herein, the water content may be between about 2 weight % to about 16 weight % of the total weight of the feed agglomerate.

The present disclosure also relates to the use of gelatinized starch for improving flowability of animal feed mash agglomerates, wherein the gelatinized starch is obtained by
a) providing a feed fraction comprising one or more starch containing sources;
b) milling the feed fraction;
c) adding water to the milled feed fraction of step (b) to obtain a slurry preferably having a water content of between 50 and 99 wt.% with respect to the weight of the slurry;
d) heating the slurry of step (c) for a period of preferably at most 5 minutes under conditions sufficient to allow the starch to gelatinize.

In an embodiment, the starch-containing sources are selected as described elsewhere from wheat, corn, milo, rice, barley, soya, rye, spelt, oats, sorghum, potato, tapioca, tuber (i.e. tuber crops, including both stem tubers and root tubers), legumes, cotton seed meal, flax seed meal and any mixtures and/or by-products thereof. Preferably the tuber crops are root tubers.

In an embodiment, the slurry in step (c) has a water content as described elsewhere herein, for example of between 55 and 95 wt.%, preferably between 60 and 90 wt.%, more preferably between 65 and 85 wt.%, most preferably between 70 and 80 wt.%, with respect to the weight of the slurry.

In an embodiment, step (d) is carried out as described elsewhere herein, for example for a period of at most 4, 3, 2, 1 minute, preferably at most 50, 40, 30 seconds; and/or at a temperature of from 60 degrees Celsius to 140 degrees Celsius for a period of from 0.1 seconds to 600 seconds.

### DETAILED DESCRIPTION OF THE DISCLOSURE

### Definitions

In the present description and examples, a number of terms are used. In order to provide a clear and consistent understanding of the specification and claims, including the scope to be given to such terms, the following definitions are provided. Unless otherwise defined herein, all technical and scientific terms used have the meaning commonly understood by one of ordinary skill in the art to which this disclosure belongs.

For convenience in this application, the terms animal feed/concentrate agglomerates and method for producing animal feed are used in their broadest sense to include all artificially agglomerated animal feeds produced from milled animal feed ingredients and the processes of making the same, regardless of the particular size, shape and physical form of the agglomerated animal feed product. Thus, animal feed agglomerates include agglomerated masses of animal feed ingredients produced in the form of cubes, cylinders, triangular forms and the like by forcing milled feed ingredients through die openings and cutting it into segments of convenient length for handling and feeding.

The term "gelatinization of starch" as used herein refers to a process consisting of breaking down the intermolecular bonds of starch molecules in the presence of water and heat, allowing the hydrogen bonding sites (the hydroxyl hydrogen and oxygen) to engage more water. This irreversibly dissolves the starch granule in water. Water acts as a plasticizer. Typically, an amount of water of at least 60 weight % of the total composition (i.e. ingredients rich in starch such as grains, wheat, corn, etc.) is required to allow substantial or full gelatinization of starch (e.g. at least 50 weight %, 55 weight %, 60 weight %, 65 weight %, 70 weight %, 75 weight %, 80 weight %, 85 weight %, 90 weight %, 95 weight %, 96 weight %, 97 weight %, 98 weight %, 99 weight % or 100 weight % of the total amount of starch (e.g. wheat)) within said composition. Using less or reducing the amount of water below 60 weight % of the total composition (e.g. 5, 10, 15, 20, 25, 30, 35. 40, 45, 50, or 55 weight % of the total composition) will not yield appreciable amount of starch gelatinization, even under high temperatures (e.g. above 55 °C such as 100 degrees Celsius or more).

Typically, the gelatinization temperature of starch vary between 55 °C and 85 °C depending upon the source of the starch (e.g. grain type or plant type), its state (natural/unmodified or processed state) and the amount of water present, pH, types and concentration of salt, sugar, fat and protein in the recipe. As the gelatinized starch cools, it forms a gel that can serve as an adhesive or binder, causing particle binding. Therefore, it is understood that both the water content or moisture level of the composition (i.e. ingredients rich in starch such as grains) to be processed and the temperature will influence the degree or level of starch gelatinization in said composition. The degree of gelatinization or amount of gelatinized starch (weight %, e.g. at least 50 % weight %) in a composition (e.g. composition or first feed fraction or second feed fraction as taught herein) can be determined by any suitable methods in the art. Non-limiting examples of methods include the enzymatic method, differential scanning calorimetry, and others. A preferred method is the enzymatic method (Shetty et al (1972) "Determining the degree of starch gelatinization", presented at the 57th annual meeting, contribution 822; Department of grain science and industry, Kansas agricultural Experiment Station, Kansas State University, Manhattan 66506; Chiang and Johnson (1977) Cereal Chem, Vol. 54(3), pages 429-435).

The term "conditioning" or "conditioning step" as used herein refers to a procedure conventionally used during the manufacture or production of animal feed agglomerates, where water, heat, steam, pressure and shear force are applied the mash mixture of feed ingredients. Typically conditioning, for instance via injection of steam, is applied for the purpose of reducing die wear and improving agglomerate quality. The conditioning conditions including amount of water, intensity of heat, steam, pressure and shear force as well as duration of treatment may vary depending on the type or content of the intended feed. The conditioning conditions may be relatively mild, e.g. temperatures ranging between 60 to 100 degrees Celsius (e.g. 60, 65, 70, 75, 80, 85, 90 or 95 degrees Celsius), pressure ranging between 1-5 MPa (e.g. 1, 2, 3, 4, or 5 MPa), and mild shear force generated by mixer device. Mild conditioning is typically applied to the mash mixture of feed ingredients, for period of time ranging between 1-10 minutes (e.g. 1, 2, 3, 4, 5, 6, 7, 8, 9 or 10 minutes), just prior to forming agglomerates. Typically, mild conditioning treatment does not significantly alter the integrity of the feed ingredients, e.g. does not substantially degrade proteins, does not substantially gelatinize starch, does not substantially destroy vitamins or beneficial enzymes, etc. In other words, "mild conditioning" employs conditioning conditions (e.g. temperature, pressure, shear force, water amount, duration of treatment) that are insufficient to completely gelatinize starch, degrade proteins, destroy vitamins and/or enzymes, etc.

Harsher condition conditions achieve the opposite. The term "harsh conditioning" or "conditioning at high temperature, pressure, and shear force conditions" refers to situations where high temperature (typically in the range of 110 - 160 degree Celsius, e.g., 110, 115, 120, 125, 130, 135, 140, 145, 150, 155 or 160 degree Celsius ), pressure (typically in the range of about 25 to 40 MPa) and shear force conditions are applied to the mash or mixture of feed ingredients, for a short duration (typically 1-10 seconds, such as 1, 2, 3, 4, 5, 6, 7, 8, 9 or 10 seconds), to promote complete starch gelatinization as well as greater mixing and linkage of the ingredients. Animal feed agglomerate producers often implement harsher conditioning in the production to increase or improve hardness or durability characteristics of the agglomerates, particularly for agglomerates comprising ingredients rich in starch. Harsh condition conditions however is associated with negative effects, such as protein degradation, destruction of vitamins and essential enzymes, and overcooking of the feed ingredients, which overall decreases the nutritive value of the ingredients. The skilled person is well-acquainted with methods and apparatus to perform conditioning, and knows how to achieve mild or harsh conditioning as described above. Non-limiting examples of suitable conditioning apparatus or machinery include condition vessels, extruder devices, expander devices, BOA compacter, and the likes.

The term 'about', as used herein indicates a range of normal tolerance in the art, for example within 2 standard deviations of the mean. The term "about" can be understood as encompassing values that deviate at most 10%, 9%, 8%, 7%, 6%, 5%, 4%, 3%, 2%, 1%, 0.5%, 0.1%, 0.05%, or 0.01% of the indicated value.

The terms 'comprising' or 'to comprise' and their conjugations, as used herein, refer to a situation wherein said terms are used in their non-limiting sense to mean that items following the word are included, but items not specifically mentioned are not excluded. It also encompasses the more limiting verbs 'to consist essentially of' and 'to consist of'.

Reference to an element by the indefinite article 'a' or 'an' does not exclude the possibility that more than one of the elements is present, unless the context clearly requires that there be one and only one of the elements. The indefinite article 'a' or 'an' thus usually means 'at least one'.

The terms 'to increase', 'to decrease' or 'to improve', as taught herein, refer to the ability to significantly increase or significantly decrease or significantly improve an outcome characteristic of an agglomerate and/or nutritional value or content thereof. Generally, a parameter is increased or decreased or improved when it is at least 5%, such as 10%, 15%, 20%, 25%, 30%, 35%, 40%, 45%, 50% higher or lower or improved, respectively, than the corresponding value in a control agglomerate. In the context of the present disclosure, the control may be produced by traditional methods.

### Process for making an animal feed agglomerate

The process for making animal feed agglomerates according to the present disclosure allows for the production of animal feed agglomerates with improved flowability (for example as measured as described in the experimental section) and having higher nutritive or functional value than conventional pellets.

It was surprisingly found that the separately added gelatinized starch, derived from a small portion of the start ingredients, allows formation of agglomerates with extremely good flowability, without having to apply high heat or steam treatment.

The process of the disclosure is particularly suitable for the production of animal feed and concentrate agglomerates comprising feed ingredients containing starch (e.g. grains).

Additionally, the present disclosure allows production of mash feed agglomerates with very good uniformity of particle size. Preferably, the obtained animal feed mash agglomerates comprise for at least 40, 50, 60, 70, 75, 80, 85, 90, 95, 96, 97, 98, 99, 100 wt.% of particles having a diameter (e.g. its largest diameter) that deviates at most 40, 30, 25, 20, 19, 18, 17, 16, 15, 14, 13, 12, 11, 10, 9, 8, 7, 6, 5, 4, 3, 2, 1% of the mean diameter of those particles. A positive correlation between the increase in feed particle size and animal growth has been demonstrated by several authors. Good uniformity of particle size is essential because some animals prefer bigger particles. Thus the dominant animals will quickly eat those bigger particles, while the rest of the animals will eat the finer particles.

The device that may be used in step k) of in the present process allows a process, wherein the ingredients (i.e. mash) are mixed, cooked, steamed, sheared, gelatinized, and formed into agglomerates, rather than simply compacted and chopped into pellets as in a pelletizing process. The process may involve higher temperatures (e.g. 135 - 140 °C) and pressure conditions (e.g. up to 25 MPa) over a shorter exposure time (e.g. 1-10 seconds). It may also use mechanical conditioning where high shear forces are applied to the mash.

Specifically, a relatively small portion of the starting ingredients, which is rich in starch, can be used to produce gelatinized starch upon heat treatment in a separate step of the manufacturing process. It was found that the gelatinized starch could be added to the core of the feed/concentrate ingredients (e.g. mash mixture of feed ingredients) at a later time point during the manufacturing process to effectively replace the traditional conditioning step that is carried out at high temperatures.

It was found that the traditional step of conditioning the mash mixture of feed ingredients using medium/high temperature (e.g. 65-125 degrees Celsius or more), pressure and shear force conditions could be omitted.

It was also found that the amount of water in the feed ingredients or to be added to the feed ingredients could be kept to a minimal levels, for instance less than 20 weight % of the total feed ingredients to be agglomerated. This not only prevents any substantial starch gelatinization to occur or take place within the feed ingredient composition but also reduces or eliminates the need to add materials to the feed mix to improve agglomerate binding properties. The process taught herein may also allow for the production of animal feed agglomerates which have a relatively low gelatinized starch content compared to feed obtained by traditional processes (e.g., processes using binding agents such as molasses).

This represents a main departure from the prevailing school of thoughts in the field, where it is believed that conditioning of the mash mixture of feed ingredients using medium/high temperature (e.g. 65-125 degrees Celsius or more), pressure and shear force conditions and/or use of binding agents (e.g. molasses) is required or essential to obtain desired agglomerates for meeting the industry standards. Particularly, this holds true for feed compositions comprising starch or high level of starch.

The process of the disclosure produces animal feed agglomerates having several advantages, including:
1. The nutritive value of the starting ingredients can be preserved i.e. no or less denaturation of proteins, substantially less or no gelatinization of starch, no or less destruction of vitamins, no or less adverse reaction or by-products (e.g. Maillard by-products). This means that no or less supplement(s) or ingredient(s) need to be added to the formulation to either to compensate for loss in nutritive properties engendered by traditional harsh conditions. Further, since the gelatinized starch is derived from the starting ingredients, its incorporation into the mash of feed ingredients further contributes to increase the nutritional value.
2. The process of the disclosure is simpler and more economical from an industrial stand point because there is no or less need for additives (e.g. binders, hardeners, compensatory nutritional ingredients, etc.) and because the present process reduces or substantially eliminates the need for complex regimens of temperature, pressure and/or shear force conditions such as applied when using compacting equipment. The process of the disclosure also allows more raw material flexibility.
3. The process of the disclosure provides customers with products having different properties and quality standards, which were not available before. Specifically, the process of the disclosure answers the demand for products which are as natural (e.g. organic, less processing) as possible, without or with less additives or supplements and which are not over processed or cooked but yet can be in an agglomerated form meeting the industry standards for the target animal.

In a first aspect, the present disclosure relates to a process for making an animal feed/concentrate mash (agglomerate), said process comprising the steps of:
a) providing a first feed fraction and a second feed fraction;
b) milling the first feed fraction;
c) adding water to the milled first feed fraction of step (b) to obtain a slurry having a water content of between 50 and 99 wt.% with respect to the weight of the slurry;
d) optionally, adding one or more enzymes to the slurry of step (c) to at least partially degrade or hydrolyse non-starch polysaccharides contained in said milled first feed fraction;
e) heating the slurry of step (c) or (d) under conditions sufficient to allow the starch to substantially gelatinize or fully gelatinize, preferably for a period of at most 10 minutes;
f) optionally milling the second feed fraction (may have been milled previously);
g) optionally, adding one or more aqueous liquids and/or applying steam to the milled second feed fraction of step (f) to obtain a feed mash;
h) optionally, heating the fraction of step (f) or the mash of step (g) under conditions insufficient to gelatinize starch or denature proteins comprised in the fraction or mash;
i) mixing the slurry of step (e) with the fraction or mash of step (f), (g) or (h) to obtain a feed mixture;
j) optionally, heating the feed mixture of step (i) under conditions insufficient to gelatinize starch or denature proteins comprised in the mixture; and
k) optionally, subjecting the feed mixture of step (i) or (j) to an (extruding) device to form an animal feed (agglomerate), wherein optionally the feed mixture of step (i) or (j) is heated under conditions insufficient to gelatinize starch or denature proteins comprised in the feed mixture in the device;
l) optionally, cooling the feed (agglomerate) of step (k);
m) optionally, drying the feed (agglomerate) of step (k) and/or (l);
wherein at least steps (c) to (e) are carried out independently of steps (g) to (h). The process does not involve a pelleting step.

In step (a), the term "first feed fraction" as used herein refers to a fraction comprising one or more starch containing sources such as one or more feed ingredients suitable for animal consumption that contain starch, preferably one or more feed ingredients that are rich in starch. Non-limiting examples of feed ingredients containing starch or rich in starch includes grains or derivative thereof (e.g. meal, flour, whole grain or part of a grain, or modified grain, root, tubers (i.e. tuber crops, including both stem tubers and root tubers) such as potato, yam, sweet potato, cassava and derivatives thereof, such as tapioca, and others, preferably tapioca etc.). The term "grains" as used herein refers to small, hard, dry seeds, with or without attached hulls or fruit layers, harvested for human or animal consumption. Agronomists also call the plants producing such seeds "grain crops". The two main types of commercial grain crops are cereals and legumes. Non-limiting examples of grain cereals include wheat, millet, maize (corn), sorghum, barley, rye, rice, oats, spelt, triticale, buckwheat, amaranth, buckwheat, chia, quinoa, and others plus byproducts thereof. Non-limiting examples of grains legumes include common beans, chickpeas, common peas (garden peas), fava beans, lentils, lima beans, peanuts, soybeans, and others. Other non-limiting examples of grains or seeds include rapeseed, sunflower seeds, safflower seeds, sunflower seeds, flax seeds, hemp seeds, poppy seeds, and others.

In an embodiment, the grain may be selected from wheat, oat, rice, rye, barley, millet, quinoa, sorghum, beans, buckwheat, amaranth, soybeans, lentils, and others, preferably wheat.

In an embodiment, the starch-containing sources of the first feed fraction may be selected from wheat, corn, milo, rice, barley, soya, rye, spelt, oats, sorghum, potato, tapioca, tuber (i.e. tuber crops, including both stem tubers and root tubers), legumes, cotton seed meal, flax seed meal, and others, and any mixtures thereof. Preferably the tuber crops are root tubers.

In a preferred embodiment, the first feed fraction is wheat or wheat flour, preferably grinded or broken wheat or wheat flour.

In an embodiment, the first feed fraction may comprise between about 10 weight % to about 100 weight % of starch, preferably at least 10%, 20%, 30%, 40%, 45%, 50%, 55%, 60%, 65%, 70%, 75%. 80%, 85%, 90%, 95%, 96%, 97%, 98%, 99% or more weight % of starch, preferably at least 40% weight % of starch. It is understood that the wt.% of starch contained in the first feed fraction will largely depend on the feed ingredient selected. For instance, oats contain about 40 wt.% of starch while barley and wheat contain about 50 wt.% and about 55 wt.% of starch, respectively.

In step (a), the term "second feed fraction" as used herein refers to the raw ingredients making up the animal feed composition or formulation. The "second feed fraction" may comprise one or more feed ingredients from an animal source or a plant source that is suitable for feeding an animal. The second feed fraction may have been milled prior to the method. Depending on the animal for which the animal feed is indented, the type of ingredients for the second feed fraction will vary. The skilled person knows how to select ingredients suitable for the second feed fraction in function of the animal category (e.g. ruminants (e.g. cows, beef), monogastric animals (pigs), poultry (e.g. broiler chicken), etc.) or species or developmental stage of an animal within a given category or species. For instance, for ruminants (e.g. cow, beef, etc.) non-limiting examples of suitable feed ingredients for the second feed fraction may include barley, wheat, corn, rapeseed meal, soybean meal, soya hulls, sunflower meal, sugar beet pulp, and others. For poultry (e.g. broiler chicken), non-limiting examples of suitable feed ingredients for the second feed fraction may include barley, wheat, wheat flour corn, corn germ, rapeseed meal, soybean meal, egg powder, sunflower meal, wheat middlings, oat middlings and others. For swine (e.g. pigs), non-limiting examples of suitable feed ingredients for the second feed fraction may include barley, oats, wheat, corn, breadcrumbs, lineseed, rapeseed meal, soybean meal, wheat middlings, wheat gluten, oak flakes, and others.

In an embodiment relating to the second feed fraction, the one or more feed ingredients from the plant source may be selected from wheat, corn, milo, rice, beets, barley, soya, rye, spelt, oats, sorghum, legumes, cotton seed meal, flax seed meal and mixtures thereof.

In an embodiment relating to the second feed fraction, the one or more feed ingredients from the animal source is selected from meat, meat meal, bone meal, fish meal, insects, insect meal, and any mixtures thereof.

In a preferred embodiment relating to the second feed fraction, the one or more feed ingredients is from a plant source, preferably grains as taught herein, e.g. wheat, oat, rice, rye, barley, millet, quinoa, sorghum, beans, buckwheat, amaranth, soybeans, lentils, triticale, and others. It may be advantageous to select a grain, particularly a grain comprising starch or a grain that is rich in starch, as one or the main starting ingredients for the production of animal feed because grains in general have high nutritive value for animals.

Other non-limiting examples of ingredients suitable for the second feed fraction include alfalfa, beet and its derived products, various industrial by-products (e.g. brewer's grain, brewer's yeast, pulp, casein, molasses etc.), seed oil, potato, tuber (i.e. tuber crops, including both stem tubers and root tubers), tapioca, fruit, algae, yeast, roughage, plant fibres, and others and any mixture thereof. Preferably the tuber crops are root tubers.

In an embodiment, the second feed ingredients fraction may comprise between about 0 weight % to about 100 weight % of starch, preferably at least about 5%, 10%, 20%, 30%, 40%, 45%, 50%, 55%, 60%, 65%, 70%, 75%. 80%, 85%, 90%, 95%, 96%, 97%, 98%, 99% or more weight % of starch.

In an embodiment, the second feed fraction may be a mixture of different ingredients as taught herein, in any desired ratio, for instance a mixture of wheat and corn in a weight % ratio of about 50:50.

In an embodiment, the second feed fraction may consist of a single type of ingredient, for instance about 100% wheat or about 100% corn, or about 100% barley or about 100% rye or about 100% triticale, etc.

In an embodiment, the first feed fraction and the second feed fraction comprise the same feed ingredients, for instance wheat. It is also understood that the first feed fraction may be a part or a proportion of the second feed fraction. For instance if the second feed fraction consists of 100 g of a mixture of wheat and corn, the first feed fraction may be a proportion of this mixture, e.g. 30 g.

In an embodiment, the first feed fraction and the second feed fraction comprise different feed ingredients, e.g. the first feed fraction may comprise wheat and the second feed fraction may comprise a mixture of corn, milo, rice and barley.

In step (b), the first feed fraction may be milled or ground or comminuted or reduced to powder using standard techniques. In an embodiment, the first feed fraction be milled or ground to obtain particles having a size of at least about 0.05 mm to about 5 mm, e.g. about 0.1 mm to about 4.5 mm, about 0.5 mm to about 4.0 mm, about 1.0 mm to about 3.5 mm, about 1.5 mm to about 3.0 mm or about 2.0 mm to about 2.5 mm. In a preferred embodiment, the first feed fraction may be milled or ground to obtain particles having a size of at least about 2.0 mm to about 2.5 mm. It is understood that depending on the target animal, the first feed ingredient fraction may be milled or ground to obtain particles having a size suitable for said target animal. The skilled person knows how to select milling or grinding or comminuting parameters to obtain the desired results per target animal. The first feed fraction may be milled using any suitable apparatus (e.g. a hammer mill). Alternatively, the first feed fraction may already be provided in a milled or grounded or comminuted form in compliance with the requirements above, so that step (c) can be omitted in such situation.

In step (c), the milled or ground or comminuted first feed fraction is mixed with a sufficient amount of water to obtain a slurry, i.e. until it reaches the consistence of a thick fluid akin mud or cement. The skilled person is well-acquainted with the term "slurry" and can even determine it visually. Depending on the type of ingredients constituting the first feed fraction, the skilled person knows how much water should be added to the milled or ground or comminuted first feed fraction so as to obtain a slurry. Preferably, the slurry has a dextrose equivalent value of at most 25, 20, 15, 10, 9, 8, 7, 6, 5, 4, 3, 2, 1, or 0.5 %. Dextrose equivalent (DE) is a measure of the amount of reducing sugars present, expressed as a percentage on a dry basis relative to dextrose. The dextrose equivalent gives an indication of the average degree of degradation. For example, DE can be measured by a titration method, e.g. according to Lane and Eynon or Luff-Schoorl and/or as described in Carbohydrate biotechnology protocols (Christopher Bucke, 1999), particularly chapter 10 - section 3.2 thereof.

In an embodiment, the amount of water or moisture level may be between about 50 to about 99 weight % of the slurry, preferably between about 55 to about 95 weight % of the slurry, preferably between about 60 to about 90 weight % of the slurry, preferably between about 65 to about 85 weight % of the slurry, preferably between about 70 to about 80 weight % of the slurry. The slurry preferably comprises at least 0.2, 0.3, 0.5, 0.5, 0.6, 0.75, 0.8, 0.9, 1, 1.25, 1.5, 2, 3 wt.% (pre)gelatinized starch (preferably in liquid form), and/or at most 30, 20, 10, 5, 3, 2 wt.%.

In step (d), although not essential, enzymes capable of degrading non-starch polysaccharide may be added. Such enzymes are referred to as "non-starch polysaccharide hydrolysing enzyme (s)" (abbreviated NSP-E). Any suitable NSP-E enzymes may be used in the processes as taught herein. The amount of enzyme needed will depend the type of ingredients making up the first feed fraction as well as the size or weight of the first feed fraction. The skilled person is well acquainted with NSP-E and is able to select a suitable NSP-E enzyme as well as to determine the appropriate dosage. Non-limiting examples include xylanases, beta-glucanases, pectinases, cellulases, hemicellulases, such as arabinase, xylase, mannase, arabinoxylanases, xylosidase, galactomannase, pectinase, (1,3- or l,4-)-β-glucanase and (endo)-xylanase, and mixture thereof. NSP-E are commercially available.

In certain embodiments relating to step (d), it may be advantageous to add one or more NSP-E enzymes, particularly in cases where the first feed fraction comprises ingredients containing non-starch polysaccharides (e.g. cereals, soybean meal etc.). The addition of NSP-E enzymes helps in obtaining a slurry having the right consistency at a desired high weight percentage (e.g. not too pasty or wall-sticking) so as not to clog or obstruct the machinery or equipment used during the manufacturing operation (e.g. pump, mixer, etc). Alternatively, NSP-E enzymes may be omitted if the starch-containing ingredients fraction does not comprise or comprise low amounts of ingredients containing non-starch polysaccharides (e.g. cereals, soybean meal, etc.), for instance in the case where the first feed fraction is wheat flour.

In an embodiment, the NSP-E enzymes may be selected from xylanases, beta-glucanases, pectinases, cellulases, hemicellulases.

In step (e) the slurry may be heated to a temperature ranging from e.g. about 60 degree Celsius to about 140 degree Celsius and/or for a period of at most 10, 9, 8, 7, 6, 5, 4, 3, 2, 1 minutes (and/or at least 0.1, 0.5, 1, 2, 5, 10 seconds) and/or from about 0.1 seconds to 300 seconds, preferably at a temperature ranging from about 70 degree Celsius to about 135 degree Celsius and/or for a period of from about 0.2 seconds to 10 seconds, preferably at a temperature ranging from about 80 degree Celsius to about 130 degree Celsius and/or for a period of from about 0.5 seconds to 8 seconds, preferably at a temperature ranging from about 90 degree Celsius to about 125 degree Celsius and/or for a period of from about 0.7 seconds to 6 seconds, preferably to a temperature of at least 80, 90, 95, 100, 105, 110 degrees or ranging from about 100 degree Celsius to about 120 degree Celsius and/or for a period of from about 1.0 seconds to 2 seconds.

In an embodiment relating to step (e), the slurry may be heated at an intensity (e.g. about 60 degree Celsius to about 140 degree Celsius such as about between 120 - 125 degree Celsius) and for a duration of time (e.g. about 0.1 seconds to 12 seconds such as about 10 - 12 seconds) sufficient to substantially or fully gelatinize the starch comprised in the first feed fraction, e.g. at least 50 weight %, preferably 55 weight %, preferably 60 weight %, preferably 65 weight %, preferably 70 weight %, preferably 75 weight %, preferably 80 weight %, preferably 85 weight %, preferably 90 weight %, preferably 95 weight %, preferably 96 weight %, preferably 97 weight %, preferably 98 weight %, preferably 99 weight %, preferably 100 weight % of the total amount of starch comprised in the first feed fraction.

The skilled person is well acquainted with methods (including temperature parameters, duration (time), water content, etc.) suitable for gelatinizing starch to a desired degree (e.g. at least 50 weight %, 55 weight %, 60 weight %, 65 weight %, 70 weight %, 75 weight %, 80 weight %, 85 weight %, 90 weight %, 95 weight %, 96 weight %, 97 weight %, 98 weight %, 99 weight % or 100 weight % of the total amount of starch to be gelatinized). The skilled person is also familiar with methods for determining the degree of gelatinization of a given composition, for instance using the methods described in Shetty et al (1972) "Determining the degree of starch gelatinization", presented at the 57th annual meeting, contribution 822; Department of grain science and industry, Kansas agricultural Experiment Station, Kansas State University, Manhattan 66506 or in Chiang and Johnson (1977) Cereal Chem., Vol. 54(3), pages 429-435).

In an embodiment relating to step (e), the slurry may be heated by applying steam or hot air to the slurry, said steam or hot air having a temperature ranging as taught herein. The steam or hot air may be applied for a duration of time as taught herein. The skilled person is well-acquainted with methods and devices suitable to apply steam or hot air to the first feed fraction so as to obtain a slurry. A non-limiting example of a suitable devices for applying hot air or steam is a jet cooker (commercially available from Henan Food systems b.v., Sappemeer, The Netherlands). Other non-limiting examples of devices for applying steam include an heat exchanger, a stirred autoclave or heated vessel, microwave.

In step (f), the second feed fraction may be milled or ground or comminuted or reduced to powder using suitable techniques and apparatuses available in the field. In an embodiment, the second feed ingredient fraction may be milled or ground to obtain particles having a size of at least about 0.5 mm to about 6 mm, e.g. about 1.0 mm to about 5.5 mm, about 1.5 mm to about 5.0 mm, about 2.0 mm to about 4.5 mm, about 2.5 mm to about 4 mm. In a preferred embodiment, the second feed ingredients fraction may be milled or ground to obtain particles having a size of at least about 3 mm to about 4 mm. It is understood that depending on the target animal, the second feed ingredient fraction may be milled or ground to obtain particles having a size suitable for said target animal. The skilled person knows how to select milling or grinding or comminuting parameters to obtain the desired results per target animal. The second feed fraction may be milled using any suitable apparatus (e.g. a hammer mill).

In a preferred embodiment, the milled first feed fraction has smaller particle size than the milled second feed fraction of step, for instance first feed fraction may have a particle size of about 2 mm to about 2.5 mm and the second feed fraction may have a particle size of about 3 mm to about 4 mm.

In step (g), although not essential, the milled or ground or comminuted second feed fraction may be mixed with a liquid (e.g. water, oils, or other water-based liquids such as molasses, vinasses, protomylasses, liquid whey) or subjected to steam so as to ease or help mixing the second feed fraction to form a feed mash, and to ease the process later on. Depending on the type of ingredients constituting the second feed fraction, the skilled person knows how much water should be added to the milled or ground or comminuted second feed fraction so as to achieve the purpose above (feed mash). In an embodiment, the amount of aqueous liquid (e.g. water) or moisture level may be between about 5 to about 50 weight % of the mixture, preferably between about 10 to about 45 weight % of the mixture, preferably between about 15 to about 40 weight % of the mixture, preferably between about 17 to about 35 weight % of the mixture, preferably between about 18 to about 30 weight % of the mixture, preferably between about 16 to about 25 weight %, preferably between about 14 to about 20 weight %, preferably between about 12 to about 15 weight % of the mixture. In a preferred embodiment, the amount of water or moisture level of the second feed fraction is no more than 12 weight % of the mixture. Is understood that when the amount of water or moisture level is low, i.e. no more than 10 weight % of the mixture, no appreciable amount of starch gelatinization of starch can take place (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction), even at temperature above 60 degrees Celsius, since water is a limiting factor in the starch gelatinization process, as taught above.

In step (h), although not essential, the second feed fraction or feed mash may be heated to or subjected to steam at a temperature ranging from about 60 degree Celsius to about 140 degree Celsius and/or for a period of from about 0.1 seconds to 12 seconds, preferably at a temperature ranging from about 65 degree Celsius to about 135 degree Celsius and/or for a period of from about 0.2 seconds to 10 seconds, preferably at a temperature ranging from about 70 degree Celsius to about 130 degree Celsius and/or for a period of from about 0.5 seconds to 8 seconds, preferably at a temperature ranging from about 75 degree Celsius to about 125 degree Celsius and/or for a period of from about 0.7 seconds to 6 seconds, preferably at a temperature ranging from about 80 degree Celsius to about 120 degree Celsius and/or for a period of from about 1.0 seconds to 4 seconds, preferably at a temperature of at least 80, 85, 90, 95, 100, 105, 110 degrees Celsius or ranging from about 85 degree Celsius to about 115, degree Celsius and/or for a period of from about 1.5 seconds to 3 seconds, preferably at a temperature ranging from about 90 degree Celsius to about 100, degree Celsius and/or for a period of from about 1.7 seconds to 2 seconds. As explained above, such heat treatment regimens or conditions are insufficient to gelatinize, such as substantially or fully gelatinize, the starch comprised in the second feed fraction or feed mash (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction) because the water or moisture level present in said second feed fraction or feed mash is too low or insufficient allow starch gelatinization.

Preferably, in step (i) the slurry and the milled second feed fraction or feed mash are mixed in a weight ratio of slurry to milled second feed fraction of about 10:90 to about 0.5:99.5. In step (i), the slurry is mixed with the second feed fraction or feed mash in a manner so as to form an homogeneous feed mixture. The mixing of the ingredients can be performed using any suitable standard means for mixing feed ingredients. he present inventors surprisingly found that a relatively small proportion of the slurry (gelatinized starch), e.g. about between 1 wt.% to about 6 wt.%, e.g. 1 wt.%, 2 wt.%, 3 wt.%, 4 wt.%, 5 wt.%, or 6 wt.% of slurry, was sufficient to bind and link the feed ingredient of the second feed fraction or feed mash so as to obtain good agglomerate quality that meets industry standards. This was surprisingly achieved without having to use harsh conditioning procedures (high temperature and steam/moisture levels) or binding agents such as molasses, which are usually used in the industry to obtain animal feed agglomerates having the industry standards.

In step (j), although not essential, the feed mixture may be may be heated to or subjected to steam at a temperature ranging from about 60 degree Celsius to about 140 degree Celsius and/or for a period of from about 0.1 seconds to 12 seconds, preferably at a temperature ranging from about 65 degree Celsius to about 135 degree Celsius and/or for a period of from about 0.2 seconds to 10 seconds, preferably at a temperature ranging from about 70 degree Celsius to about 130 degree Celsius and/or for a period of from about 0.5 seconds to 8 seconds, preferably at a temperature ranging from about 75 degree Celsius to about 125 degree Celsius and/or for a period of from about 0.7 seconds to 6 seconds, preferably at a temperature ranging from about 80 degree Celsius to about 120 degree Celsius and/or for a period of from about 1.0 seconds to 4 seconds, preferably at a temperature ranging from about 85 degree Celsius to about 115, degree Celsius and/or for a period of from about 1.5 seconds to 3 seconds, preferably at a temperature of at least 80, 85, 90, 95, 100, 105, 110 degrees Celsius or ranging from about 90 degree Celsius to about 100, degree Celsius and/or for a period of from about 1.7 seconds to 2 seconds. As explained above, such heat treatment regimens or conditions are insufficient to gelatinize, such as substantially or fully gelatinize, the starch comprised in the second feed fraction or feed mash (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction) because the water or moisture level present in said second feed fraction or feed mash is too low or insufficient allow starch gelatinization. The present inventors have found that it may be advantageous in certain embodiment to subject the feed mixture to heat or steam treatment as taught above so as to speed up or help the drying of the feed. It may also be advantageous to ease or help the process per se, e.g. by making the feed mixture more malleable (cause less stress or friction in the device).

In step (k), the feed mixture is subjected to a (extruding) device suitable to form agglomerate of the desired size, length and shape. Although not essential, the feed mixture may be subjected to the same heat or stream treatment as taught above (for step (h) or (j)) within the device. The skilled person understands that depending on the feed composition and depending on the animal for which the feed is indented, agglomerates of varying size, shape and/or length are desired. The skilled person knows how to select a suitable device to obtain the desired animal feed agglomerate characteristics.

In step (l), although not essential, the feed agglomerates may be (actively) cooled, using any suitable standard cooling devices or may be cooled by letting the feed agglomerate cool down under ambient room temperature. Any suitable cooling device may be used. Non-limiting examples of suitable cooling devices include belt coolers, counter flow coolers.

In step (m), although not essential, the feed agglomerates may be (actively) dried using any using any suitable standard drying devices or may be dried by letting the feed dry under ambient room temperature. Any suitable drying device may be used. Non-limiting examples of suitable drying devices include counter flow dryers, drum dryer.

In an embodiment, the animal for which the animal feed (agglomerates) as taught herein are intended may be any animal, male or female, at any developmental stage (e.g. new born, juvenile, adult, elderly). Non-limiting examples of animals include livestock or cattle animals such as cows, bulls, horses, sheeps, goats, swines, layers, broilers, turkeys, rabbits etc, domestic animals such as cats, dogs, horses, rats, mice, rabbits, etc.

In an embodiment, the animal is not an aquatic animal such as fish, shrimps, lobsters, etc.

In a preferred embodiment, the animal is a livestock or a cattle animal selected from cows, beef, bulls, oxen, calves, sheep, goats, horses, swine, poultry, etc.

In an embodiment, the animal may be selected from ruminants, swine, and poultry.

In an embodiment, the ruminant may be selected from bovine, ovine and caprine, preferably bovine, e.g. non-limiting examples include dairy cattle (e.g. lactating cow), beef cattle (e.g. beef, bulls), sheep, goats, buffalo, moose, elks, bison, giraffes, yak, deer, antelopes, and the like.

In the method as taught herein, at least steps (c) to (e) are carried out independently of steps (g) to (h), preferably steps (a) to (e) are carried out independently of steps (f) to (h). This represents a unique feature, which is not carried out in traditional pelleting or extrusion processes or methods.

In an embodiment, steps (c) to (e) may be performed simultaneously with steps (g) to (h) or almost at the same time as steps (g) to (h), preferably steps (a) to (e) may be performed simultaneously with steps (f) to (h) or almost at the same time as steps (f) to (h)

In an embodiment, steps (c) to (e) may be performed shortly before or shortly after performing steps (g) to (h), preferably steps (a) to (e) may be performed shortly before or shortly after performing steps (f) to (h).

It is understood that steps (c) to (e) and steps (g) to (h), preferably steps (a) to (e) and steps (f) to (h) may be carried out as taught above within the same industrial process, e.g. within the same production lines using suitable equipment as taught herein.

Overall, the process of the disclosure is particularly well-suited to handle animal feed composition comprising starch (e.g. grains rich in starch). Further, the process of the disclosure allows for the production of animal feed agglomerates having a higher nutritive value or content (e.g. less sugars and/or less potassium) than customary obtained by traditional processes without compromising the industrial standard of quality.

### Animal feed obtainable by the method of the disclosure

In a further aspect, the present disclosure relates to an animal feed agglomerate obtainable by the process as taught herein.

In preferred embodiment, the animal feed is free of molasses, binding agents (not being starch), hardeners, and/or lignosulfonates. The present inventors have found that the use of binders or linkers or additives such as molasses, hardeners, and/or lignosulfonates could be avoided in the method of the present disclosure. Specifically, the present inventors found that a small amount of slurry as taught herein (gelatinized starch) could be used to replace traditional binders, linkers or additives, and yet still provide feed agglomerates having the desired quality. This is advantageous from an industry point of view since it reduces complexity and costs of the process (no need to add ingredients and steps to the process). This is also advantageous from the customer point of view since the method of the disclosure delivers feed products which are devoid of ingredients such as molasses, vinasses, lignosulfonates, and other traditional binders, linkers, hardeners and the like. As a consequence, the feed produced by the process as taught have a higher nutritional value (e.g. less sugars and/or less potassium).

In an embodiment, the animal feed has a water or moisture content of about 2 weight % to about 16 weight % of the final feed product, preferably about 4 weight % to about 15.5 weight % of the final feed product, preferably about 6 weight % to about 15 weight % of the final feed product, preferably about 8 weight % to about 14.5 weight % of the final feed product, preferably about 10 weight % to about 14 weight % of the final feed product.

The animal feed mash agglomerates obtainable by the process as described herein may comprise between 0.1 and 10 wt.%, preferably between 0.5 and 5 wt%, more preferably between 1 and 4 wt.%, most preferably between 1.5 and 3.5 wt.% gelatinized starch.

### Brief description of Figure

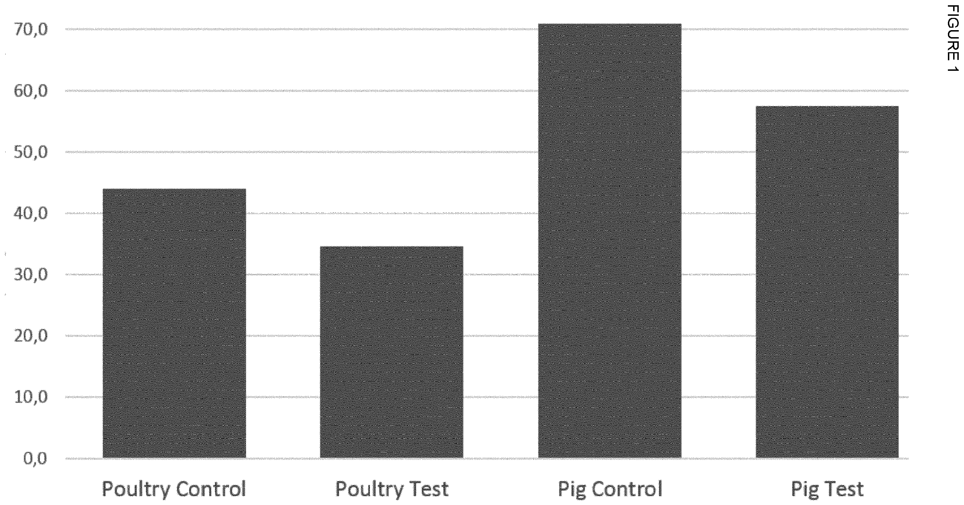

Figure 1: Effect of cooked wheat slurry on flowability of mash feed. The Y-axis shows the measured minimum opening for free flow of the respective feed. The smaller the minimum opening for free flow, the better the flowability of the respective feed.

### EXAMPLES

### Production of animal feed agglomerates

The first feed fraction consisted of wheat and the second feed fraction consisted of a mixture of corn, sodium chloride, magnesium chloride, premix, and soy oil. Specifically, the animal feed agglomerates were prepared as follows:
- An amount of 50 kg of wheat (as first feed fraction) and an amount of 5000 Kg of mixture consisting of corn, sodium chloride, magnesium chloride, premix, and soy oil (as second feed fraction) were provided.
- The wheat was milled to obtain particles having a size of about 2.25 mm.
- The milled wheat was placed in a slurry tank comprising a mixing paddle. An amount of 100 litres of water was added to the slurry tank. The milled wheat was then added to the slurry tank and mixed with the water with the mixing paddle to obtain a slurry.
- In a subsequent step, the slurry was placed into a jet cooker. The slurry was heated at a temperature of 123 degrees Celsius for a period of 10 seconds, under steam pressure of 4 Kpa, until the slurry was gelatinized.
- The second feed fraction consisting of a mixture of corn, sodium chloride, magnesium chloride, premix, and soy oil, was milled to obtain particles having a size of 4 mm.
- The slurry of gelatinized starch (first feed fraction) was mixed with the milled second feed fraction to obtain an animal feed mixture. The ratio wt.% of slurry (first feed fraction) to milled second feed fraction was 3:97.
- The animal feed was cooled at room temperature.
- The animal feed produced by the method above are suitable for ruminants, e.g. cow, beef etc.

It was found that a gelatinization period of at most 5 minutes in step e) further prevents loss in nutritional value and undesired Maillard reactions. It was found that using a watery slurry, i.e. having a water content of between 50 and 99 wt.%, advantageously improves quality of the animal feed agglomerates obtained.

### Testing flow characteristics

### Testing method

To test the effect of adding gelatinized starch, two types of feed were selected and produced in the ForFarmers test plant in Heijnen (NL). For poultry layer feed composition 25123 was selected. For pigs the piglet feed composition 22595 was chosen.

| | Composition 25123 | Composition 22595 |
|---|---|---|
| | % | % |
| barley | 1.5 | 20 |
| wheat | 24 | 35 |
| corn | 40 | 10 |
| wheat grit pellets | 6 | 7.5 |
| cookie flour | | 7.5 |
| soybean meal | | 10 |
| sunflower meal | 15 | 4 |
| DDGS corn | 3 | |
| rapeseed meal | 6 | |
| premix | 4.5 | 6 |

The test applied to measure flowability is in house developed and consists of a standardized column (diameter 8.5 cm, length 40 cm) in which a standard amount of feed (1000 gram) is added. At the bottom of the column differently sized openings (round) are mounted. The measured value represents the smallest opening measured in mm. When determining the diameter, product is continuously added to the column. The opening varies until the product no longer flows on its own. The diameter that is found then gives the flowability value. This system relates to flowability out of silo and feeder on farm. The smaller the opening creating spontaneous flow, the better the flowability. Multiple treatments adding the cooked slurry were tested for both feeds.

### Results

In the Table 1 below and Figure 1 the average results of the Feeds with added gelatinized starch vs. the control feeds are given.

**Table 1: Effect of cooked wheat slurry on flowability of mash feed**

| | Minimum flow opening |
|---|---|
| | (mm diameter) |
| **Feed** | |
| Poultry Control | 44,0 |
| Poultry Test | 34,7 |
| Pig Control | 71,0 |
| Pig Test | 57,5 |

As is clear from Table 1 and Figure 1, adding gelatinized starch improves flowability of mash feeds.

## Claims

1. A process for making animal feed mash agglomerates, said process comprising the steps of:
a) providing a first feed fraction comprising one or more starch containing sources, and a second feed fraction;
b) milling the first feed fraction;
c) adding water to the milled first feed fraction of step (b) to obtain a slurry having a water content of between 50 and 99 wt.% with respect to the weight of the slurry;
d) heating the slurry of step (c) for a period of at most 5 minutes under conditions sufficient to allow the starch to gelatinize;
e) milling the second feed fraction;
f) mixing the heated slurry of step (d) with the second feed fraction of step (e) to obtain animal feed mash agglomerates;
wherein at least steps (b) to (d) are carried out independently of step (e), and wherein the method does not comprise a pelleting step.

2. The process according to claim 1, wherein the starch-containing sources are selected from wheat, corn, milo, rice, barley, soya, rye, spelt, oats, sorghum, potato, tapioca, tuber crops, legumes, cotton seed meal, flax seed meal and any mixtures thereof.

3. The process according to any of the preceding claims, wherein the second feed fraction comprises one or more feed ingredients from an animal source or a plant source.

4. The process according to claim 3, wherein the one or more feed ingredients from the plant source is selected from wheat, corn, milo, rice, beets, barley, soya, rye, spelt, oats, sorghum, legumes, cotton seed meal, flax seed meal and mixtures thereof.

5. The process according to claim 3, wherein the one or more feed ingredients from the animal source is selected from meat, meat meal, bone meal, fish meal, insects, insect meal, and any mixtures thereof.

6. The process according to any one of the preceding claims, wherein the first feed fraction and the second feed fraction comprise the same feed ingredients.

7. Process according to any one of the preceding claims, wherein the slurry in step (c) has a water content of between 55 and 95 wt.%, preferably between 60 and 90 wt.%, more preferably between 65 and 85 wt.%, most preferably between 70 and 80 wt.%, with respect to the weight of the slurry.

8. Process according to any one of the preceding claims, wherein step (d) is carried out for a period of at most 4, 3, 2, 1 minute, preferably at most 50, 40, 30 seconds; and/or at a temperature of from 60 degrees Celsius to 140 degrees Celsius for a period of from 0.1 seconds to 12 seconds.

9. Process according to any one of the preceding claims, wherein in step (f) the heated slurry and the milled second feed fraction are mixed in a weight ratio of slurry to milled second feed fraction of about 10:90 to about 0.5:99.5 and/or wherein the feed mixture has a water content of at most 20, 19, 18, 17, 16 or 15 wt.%.

10. Process according to any one of the preceding claims, wherein the animal is selected from ruminants, swine, and poultry, preferably wherein the animal is a ruminant selected from bovine, ovine and caprine, most preferably bovine.

11. Animal feed mash agglomerates obtainable by the process according to anyone of claims 1-10, comprising between 0.1 and 10 wt.%, preferably between 0.5 and 5 wt% gelatinized starch.

12. Use of gelatinized starch for improving flowability of animal feed mash agglomerates, wherein the gelatinized starch is obtained by
a) providing a feed fraction comprising one or more starch containing sources;
b) milling the feed fraction;
c) adding water to the milled feed fraction of step (b) to obtain a slurry preferably having a water content of between 50 and 99 wt.% with respect to the weight of the slurry;
d) heating the slurry of step (c) for a period of preferably at most 5 minutes under conditions sufficient to allow the starch to gelatinize.

13. Use according to claims 12, wherein the starch-containing sources are selected from wheat, corn, milo, rice, barley, soya, rye, spelt, oats, sorghum, potato, tapioca, tuber crops, legumes, cotton seed meal, flax seed meal and any mixtures thereof.

14. Use according to any one of claims 12-13, wherein the slurry in step (c) has a water content of between 55 and 95 wt.%, preferably between 60 and 90 wt.%, more preferably between 65 and 85 wt.%, most preferably between 70 and 80 wt.%, with respect to the weight of the slurry.

15. Use according to any one of claims 12-14, wherein step (d) is carried out for a period of at most 4, 3, 2, 1 minute, preferably at most 50, 40, 30 seconds; and/or at a temperature of from 60 degrees Celsius to 140 degrees Celsius for a period of from 0.1 seconds to 12 seconds.

16. Use according to any one of claims 12-15, wherein the animal is selected from ruminants, swine, and poultry, preferably wherein the animal is a ruminant selected from bovine, ovine and caprine, most preferably bovine.

## Patentansprüche

1. Verfahren zur Herstellung von Tierfuttermaische-Agglomeraten, wobei das Verfahren die folgenden Schritte umfasst:
a) Bereitstellen einer ersten Futterfraktion, umfassend eine oder mehrere stärkehaltige Quellen, und einer zweiten Futterfraktion;
b) Mahlen der ersten Futterfraktion;
c) Zugeben von Wasser zu der gemahlenen ersten Futterfraktion aus Schritt (b), um eine Aufschlämmung mit einem Wassergehalt zwischen 50 und 99 Gew.-%, bezogen auf das Gewicht der Aufschlämmung, zu erhalten;
d) Erhitzen der Aufschlämmung aus Schritt (c) für einen Zeitraum von höchstens 5 Minuten unter Bedingungen, die ausreichen, um die Gelatinierung der Stärke zu ermöglichen;
e) Mahlen der zweiten Futterfraktion;
f) Mischen der erhitzten Aufschlämmung aus Schritt (d) mit der zweiten Futterfraktion aus Schritt (e), um Tierfuttermaische-Agglomerate zu erhalten;
wobei mindestens die Schritte (b) bis (d) unabhängig von Schritt (e) durchgeführt werden und wobei das Verfahren keinen Pelletierungsschritt umfasst.

2. Verfahren nach Anspruch 1, wobei die stärkehaltigen Quellen ausgewählt sind aus Weizen, Mais, Milo, Reis, Gerste, Soja, Roggen, Dinkel, Hafer, Sorghum, Kartoffeln, Tapioka, Knollenfrüchten, Hülsenfrüchten, Baumwollsamenmehl, Leinsamenmehl und beliebigen Mischungen davon.

3. Verfahren nach einem der vorhergehenden Ansprüche, wobei die zweite Futterfraktion einen oder mehrere Futterbestandteile aus einer tierischen oder pflanzlichen Quelle umfasst.

4. Verfahren nach Anspruch 3, wobei der eine oder die mehreren Futterbestandteile aus der pflanzlichen Quelle ausgewählt sind aus Weizen, Mais, Milo, Reis, Rüben, Gerste, Soja, Roggen, Dinkel, Hafer, Sorghum, Hülsenfrüchten, Baumwollsamenmehl und Leinsamenmehl und Mischungen davon.

5. Verfahren nach Anspruch 3, wobei der eine oder die mehreren Futterbestandteile aus der tierischen Quelle ausgewählt sind aus Fleisch, Fleischmehl, Knochenmehl, Fischmehl, Insekten, Insektenmehl und beliebigen Mischungen davon.

6. Verfahren nach einem der vorhergehenden Ansprüche, wobei die erste Futterfraktion und die zweite Futterfraktion die gleichen Futterbestandteile umfassen.

7. Verfahren nach einem der vorhergehenden Ansprüche, wobei die Aufschlämmung in Schritt (c) einen Wassergehalt zwischen 55 und 95 Gew.-%, bevorzugt zwischen 60 und 90 Gew.-%, stärker bevorzugt zwischen 65 und 85 Gew.-%, am meisten bevorzugt zwischen 70 und 80 Gew.-%, bezogen auf das Gewicht der Aufschlämmung, aufweist.

8. Verfahren nach einem der vorhergehenden Ansprüche, wobei Schritt (d) für einen Zeitraum von höchstens 4, 3, 2, 1 Minute(n), vorzugsweise höchstens 50, 40, 30 Sekunden, durchgeführt wird; und/oder bei einer Temperatur von 60 Grad Celsius bis 140 Grad Celsius für einen Zeitraum von 0,1 Sekunden bis 12 Sekunden.

9. Verfahren nach einem der vorhergehenden Ansprüche, wobei in Schritt (f) die erhitzte Aufschlämmung und die gemahlene zweite Futterfraktion in einem Gewichtsverhältnis von Aufschlämmung zu gemahlener zweiter Futterfraktion von etwa 10:90 bis etwa 0,5:99,5 gemischt werden und/oder wobei die Futtermischung einen Wassergehalt von höchstens 20, 19, 18, 17, 16 oder 15 Gew.-% aufweist.

10. Verfahren nach einem der vorhergehenden Ansprüche, wobei das Tier aus Wiederkäuern, Schweinen und Geflügel ausgewählt ist, bevorzugt wobei das Tier ein Wiederkäuer ist, ausgewählt aus Rind, Schaf und Ziege, am meisten bevorzugt Rind.

11. Tierfuttermaische-Agglomerate, erhältlich durch das Verfahren nach einem der Ansprüche 1-10, umfassend zwischen 0,1 und 10 Gew.-%, bevorzugt zwischen 0,5 und 5 Gew.-% gelatinierte Stärke.

12. Verwendung von gelatinierter Stärke zur Verbesserung der Fließfähigkeit von Tierfuttermaische-Agglomeraten, wobei die gelatinierte Stärke erhalten wird durch
a) Bereitstellen einer Futterfraktion, umfassend eine oder mehrere stärkehaltige Quellen,
b) Mahlen der Futterfraktion;
c) Zugeben von Wasser zu der gemahlenen Futterfraktion aus Schritt (b), um eine Aufschlämmung zu erhalten, die vorzugsweise einen Wassergehalt zwischen 50 und 99 Gew.-%, bezogen auf das Gewicht der Aufschlämmung, aufweist;
d) Erhitzen der Aufschlämmung aus Schritt (c) für einen Zeitraum von vorzugsweise höchstens 5 Minuten unter Bedingungen, die ausreichen, um die Gelatinierung der Stärke zu ermöglichen.

13. Verwendung nach Anspruch 12, wobei die stärkehaltigen Quellen ausgewählt sind aus Weizen, Mais, Milo, Reis, Gerste, Soja, Roggen, Dinkel, Hafer, Sorghum, Kartoffeln, Tapioka, Knollenfrüchten, Hülsenfrüchten, Baumwollsamenmehl, Leinsamenmehl und beliebigen Mischungen davon.

14. Verwendung nach einem der Ansprüche 12-13, wobei die Aufschlämmung in Schritt (c) einen Wassergehalt zwischen 55 und 95 Gew.-%, bevorzugt zwischen 60 und 90 Gew.-%, stärker bevorzugt zwischen 65 und 85 Gew.-%, am meisten bevorzugt zwischen 70 und 80 Gew.-%, bezogen auf das Gewicht der Aufschlämmung, aufweist.

15. Verwendung nach einem der Ansprüche 12-14, wobei Schritt (d) für einen Zeitraum von höchstens 4, 3, 2, 1 Minute(n), vorzugsweise höchstens 50, 40, 30 Sekunden, durchgeführt wird; und/oder bei einer Temperatur von 60 Grad Celsius bis 140 Grad Celsius für einen Zeitraum von 0,1 Sekunden bis 12 Sekunden.

16. Verwendung nach einem der Ansprüche 12-15, wobei das Tier aus Wiederkäuern, Schweinen und Geflügel ausgewählt ist, bevorzugt wobei das Tier ein Wiederkäuer ist, ausgewählt aus Rind, Schaf und Ziege, vorzugsweise Rind.

## Revendications

1. Procédé de fabrication d'agglomérats de pâte d'aliments pour animaux, comprenant les étapes suivantes consistant à :
a) fournir une première fraction d'aliments comprenant une ou plusieurs sources contenant de l'amidon, et une deuxième fraction d'aliments ;
b) broyer la première fraction d'aliments
c) ajouter de l'eau à la première fraction d'aliments broyés de l'étape (b) pour obtenir une suspension ayant une teneur en eau comprise entre 50 et 99 % en poids par rapport au poids de la suspension ;
d) chauffer la suspension de l'étape c) pendant une période d'au plus 5 minutes dans des conditions suffisantes pour permettre à l'amidon de se gélatiniser ;
e) broyer la deuxième fraction d'aliments ;
f) mélanger la suspension chauffée à l'étape d) avec la deuxième fraction d'aliments de l'étape e) pour obtenir des agglomérats de pâte d'aliments pour animaux ;
dans laquelle au moins les étapes b) à d) sont effectuées indépendamment de l'étape e), et dans laquelle la méthode ne comprend pas d'étape de granulation.

2. Procédé selon la revendication 1, dans lequel les sources contenant de l'amidon sont choisies parmi le blé, le maïs, le milo, le riz, l'orge, le soja, le seigle, l'épeautre, l'avoine, le sorgho, la pomme de terre, le tapioca, les tubercules, les légumineuses, la farine de graines de coton, la farine de graines de lin et tous leurs mélanges.

3. Procédé selon l'une des revendications précédentes, dans lequel la deuxième fraction d'aliments comprend un ou plusieurs ingrédients alimentaires provenant d'une source animale ou d'une source végétale.

4. Procédé selon la revendication 3, dans lequel le ou les ingrédients alimentaires provenant de la source végétale sont choisis parmi le blé, le maïs, le milo, le riz, la betterave, l'orge, le soja, le seigle, l'épeautre, l'avoine, le sorgho, les légumineuses, la farine de graines de coton, la farine de graines de lin et leurs mélanges.

5. Procédé selon la revendication 3, dans lequel le ou les ingrédients d'alimentation provenant de la source animale sont choisis parmi la viande, la farine de viande, la farine d'os, la farine de poisson, les insectes, la farine d'insectes et tous les mélanges de ceux-ci.

6. Procédé selon l'une quelconque des revendications précédentes, dans lequel la première fraction d'aliments et la seconde fraction d'aliments comprennent les mêmes ingrédients alimentaires.

7. Procédé selon l'une quelconque des revendications précédentes, dans lequel la suspension à l'étape (c) a une teneur en eau comprise entre 55 et 95 % en poids, de préférence entre 60 et 90 % en poids, plus préférentiellement entre 65 et 85 % en poids, de préférence encore entre 70 et 80 % en poids, par rapport au poids de la suspension.

8. Procédé selon l'une quelconque des revendications précédentes, dans lequel l'étape (d) est effectuée pendant une période d'au plus 4, 3, 2, 1 minutes, de préférence d'au plus 50, 40, 30 secondes ; et/ou à une température de 60 degrés Celsius à 140 degrés Celsius pendant une période de 0,1 seconde à 12 secondes.

9. Procédé selon l'une quelconque des revendications précédentes, dans lequel, à l'étape (f), la suspension chauffée et la deuxième fraction d'aliments broyés sont mélangées selon un rapport en poids entre la suspension et la deuxième fraction d'aliments broyés d'environ 10:90 à environ 0,5:99,5 et/ou dans lequel le mélange d'aliments a une teneur en eau d'au plus 20, 19, 18, 17, 16 ou 15 % en poids.

10. Procédé selon l'une quelconque des revendications précédentes, dans lequel l'animal est choisi parmi les ruminants, les porcs et la volaille, de préférence dans lequel l'animal est un ruminant choisi parmi les bovins, les ovins et les caprins, de préférence les bovins.

11. Agglomérats de pâte d'aliments pour animaux obtenus avec le procédé selon l'une quelconque des revendications 1 à 10, comprenant entre 0,1 et 10 % en poids, de préférence entre 0,5 et 5 % en poids d'amidon gélatinisé.

12. Utilisation d'amidon gélatinisé pour améliorer la fluidité des agglomérats de pâte d'aliments pour animaux, l'amidon gélatinisé étant obtenu en réalisant les étapes consistant à :
a) fournir une fraction d'aliments comprenant une ou plusieurs sources contenant de l'amidon ;
b) broyer la fraction d'aliments pour animaux ;
c) ajouter de l'eau à la fraction d'aliments broyés de l'étape b) pour obtenir une suspension ayant de préférence une teneur en eau comprise entre 50 et 99 % en poids par rapport au poids de la suspension
d) chauffer la suspension de l'étape c) pendant une période de préférence d'au plus 5 minutes dans des conditions suffisantes pour permettre à l'amidon de se gélatiniser.

13. Utilisation selon la revendication 12, dans laquelle les sources contenant de l'amidon sont choisies parmi le blé, le maïs, le milo, le riz, l'orge, le soja, le seigle, l'épeautre, l'avoine, le sorgho, la pomme de terre, le tapioca, les tubercules, les légumineuses, la farine de graines de coton, la farine de graines de lin et tous leurs mélanges.

14. Utilisation selon l'une quelconque des revendications 12 à 13, dans laquelle la suspension à l'étape (c) a une teneur en eau comprise entre 55 et 95 % en poids, de préférence entre 60 et 90 % en poids, plus préférentiellement entre 65 et 85 % en poids, de préférence encore entre 70 et 80 % en poids, par rapport au poids de la suspension.

15. Utilisation selon l'une quelconque des revendications 12 à 14, dans laquelle l'étape (d) est effectuée pendant une période d'au plus 4, 3, 2, 1 minutes, de préférence d'au plus 50, 40, 30 secondes ; et/ou à une température de 60 degrés Celsius à 140 degrés Celsius pendant une période de 0,1 seconde à 12 secondes.

16. Utilisation selon l'une quelconque des revendications 12 à 15, dans laquelle l'animal est choisi parmi les ruminants, les porcs et la volaille, de préférence dans laquelle l'animal est un ruminant choisi parmi les bovins, les ovins et les caprins, de préférence les bovins.
